(19) Europäisches Patentamt
European Patent Office
Office européen des brevets

(11) **EP 3 353 878 B1**

(12) **EUROPÄISCHE PATENTSCHRIFT**

(45) Veröffentlichungstag und Bekanntmachung des Hinweises auf die Patenterteilung:
**15.05.2019 Patentblatt 2019/20**

(21) Anmeldenummer: **16766264.2**

(22) Anmeldetag: **07.09.2016**

(51) Int Cl.:
*H02K 1/20* (2006.01)   *H02K 1/32* (2006.01)

(86) Internationale Anmeldenummer:
**PCT/EP2016/071066**

(87) Internationale Veröffentlichungsnummer:
**WO 2017/050575 (30.03.2017 Gazette 2017/13)**

(54) **ELEKTRISCHE MASCHINE MIT RADIALEN KÜHLSCHLITZEN SOWIE WINDKRAFTANLAGE**

ELECTRIC MACHINE WITH RADIAL COOLING SLITS AND WIND POWER PLANT

MACHINE ELECTRIQUE DOTEE DE FENTES D'AERATION RADIALES ET EOLIENNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.09.2015 EP 15185997**

(43) Veröffentlichungstag der Anmeldung:
**01.08.2018 Patentblatt 2018/31**

(73) Patentinhaber: **Siemens Aktiengesellschaft**
**80333 München (DE)**

(72) Erfinder:
• **BRASAS, Frank**
**84103 Postau (DE)**
• **GRUBER, Robert**
**94099 Ruhstorf (DE)**
• **KROMPASS, Martin**
**94036 Passau (DE)**
• **MEMMINGER, Oliver**
**94127 Neuburg a. Inn (DE)**
• **SCHIFFERER, Klaus**
**94127 Neuburg am Inn (DE)**
• **SPERL, Tobias**
**84337 Pfarrkirchen (DE)**
• **ZEICHFÜSSL, Roland**
**94099 Ruhstorf a. d. Rott (DE)**

(56) Entgegenhaltungen:
EP-A1- 1 050 949   EP-A1- 2 744 075
CN-U- 203 278 421   DE-A1-102014 115 666

EP 3 353 878 B1

**Beschreibung**

Die vorliegende Erfindung betrifft eine elektrische Maschine mit einem ersten Aktivteil und einem zweiten Aktivteil, wobei das erste Aktivteil und das zweite Aktivteil jeweils eine Mehrzahl von Teilblechpaketen umfasst, jedes der Teilblechpakete eine Mehrzahl von Einzelblechen mit einer jeweiligen axialen Breite umfasst, die Teilblechpakete in axialer Richtung derart zueinander beabstandet angeordnet sind, dass sich jeweils zwischen zwei benachbarten Teilblechpaketen ein radialer Kühlschlitz ausbildet und die radialen Kühlschlitze in dem ersten Aktivteil im Vergleich zu den radialen Kühlschlitzen in dem zweiten Aktivteil in axialer Richtung versetzt angeordnet sind. Darüber hinaus betrifft die vorliegende Erfindung eine Windkraftanlage mit einer derartigen elektrischen Maschine.

Das Interesse richtet sich vorliegend auf elektrische Maschinen. Derartige elektrische Maschinen umfassen ein erstes und ein zweites Aktivteil beziehungsweise einen Stator und einen Rotor. Die Aktivteile können wiederum aus Blechpaketen gebildet sein, die jeweils eine Mehrzahl von Einzelblechen umfassen. Um eine ausreichende Kühlung der elektrischen Maschine zu garantieren, sind die Einzelbleche so angeordnet, dass sich radiale Kühlschlitze ergeben, durch welche ein Kühlmedium strömen kann.

Insbesondere wenn die elektrische Maschine als Generator in einer Windkraftanlage verwendet wird, sind die Betriebsgeräusche der elektrischen Maschine von großer Bedeutung. Die Geräuschintensität in der Umgebung einer Windkraftanlage wird zumeist mit dem Schalldruckpegel in der Einheit dB(A) bewertet. So gibt es klare Grenzwerte für den Schalldruckpegel abhängig von der Umgebung und der Tageszeit. Beispielsweise gilt es, in der Umgebung von vorwiegend gewerblichen Anlagen bei Tag einen Grenzwert von 65 dB(A) und bei Nacht einen Grenzwert von 50 dB(A) einzuhalten. In Wohngebieten, insbesondere in reinen Wohngebieten, sind diese Grenzwerte entsprechend reduziert. Die Schallemission einer Windkraftanlage hat unterschiedliche Ursachen. Aerodynamische Geräusche, die in erster Linie vom Rotor ausgehen, und die verschiedenartigsten mechanischen Geräusche bestimmen den gemessenen Gesamtschallleistungspegel. Die verschiedenen Geräuschquellen müssen in der Entwicklung erkannt und sorgfältig analysiert werden. Jede einzelne Ursache erfordert spezielle Maßnahmen, um eine insgesamt geräuscharme Konstruktion zu realisieren. Als ein Bestandteil der Windkraftanlage muss auch der Windkraftgenerator die von dem Kunden spezifizierten Grenzwerte für den Schalldruckpegel erfüllen. Dabei gilt es nicht nur den Gesamtpegel einzuhalten, sondern auch Maximalwerte für einzelne Frequenzen oder Frequenzbereiche. Werden Maximalwerte für einzelne Frequenzen oder Frequenzbereiche überschritten, spricht man von Einzeltönen beziehungsweise Tonhaltigkeiten des Generators.

Bisher wurde versucht, die Probleme mit der zu großen Schallemission durch Maßnahmen in der Luftführung des Kühlkreislaufes beziehungsweise der Kühlkreisläufe der elektrischen Maschine zu beheben. Weiterhin ist es bekannt, entsprechende Schalldämmelemente aus verschiedenen Werkstoffen zu verwenden, um die Schallemissionen zu reduzieren. Bei Synchronmaschinen ist es zudem bekannt, dass die radialen Kühlschlitze in dem Rotor gegenüber den radialen Kühlschlitzen in dem Stator zueinander verschoben sind. Dies bringt den Vorteil mit sich, dass ein pulsierender Kühlluftstrom aus dem Rotor nicht unmittelbar auf Hindernisse in den Statorkühlschlitzen trifft und somit Schallemissionen verringert werden.

Hierzu beschreibt die DE 10 2014 115 666 A1 einen offenen Induktionsmotor, bei welchem ein Rotor eine Struktur aufweist, durch welche Luft strömen kann und folglich die Kühlungseffizienz des Rotors und eines Stators verbessert werden kann. Der Induktionsmotor beinhaltet einen Stator, welcher einen Eisen-Statorkern aufweisend ein radiales Kanalloch und eine Statorspule, welche um den Eisen-Statorkern gewickelt ist, beinhaltet. Zudem umfasst der Induktionsmotor einen Rotor mit einer Vielzahl von Eisen-Rotorkernen, welche in einer Axialrichtung einer Drehwelle geschichtet und an die Drehwelle gekoppelt sind, und mit einer Rotorspule, welche an die Vielzahl von Eisen-Rotorkernen gekoppelt ist. Der Rotor umfasst ferner Kanalplatten, welche zwischen der Vielzahl von Eisen-Rotorkernen geschichtet sind.

Darüber hinaus beschreibt die CN 203 278 421 U eine elektrische Maschine mit einem Stator und einem Rotor, welche jeweils radiale Kühlkanäle aufweisen. Dabei sind die radialen Kühlschlitze des Stators und die radialen Kühlschlitze des Rotors versetzt zueinander angeordnet. Ferner kann es vorgesehen sein, dass die Breite der Kühlschlitze in dem Stator der Hälfte der Breite der Kühlschlitze in dem Rotor entspricht. Zudem können in dem Stator doppelt so viele Kühlschlitze wie in dem Rotor vorgesehen sein.

Es ist Aufgabe der vorliegenden Erfindung, eine Lösung aufzuzeigen, wie im Betrieb einer elektrischen Maschine die Schallemissionen effizient reduziert werden können.

Diese Aufgabe wird erfindungsgemäß durch eine elektrische Maschine gemäß Anspruch 1 sowie eine Windkraftanlage mit den Merkmalen gemäß Anspruch 1 oder einen der abhängigen Ansprüche gelöst. Vorteilhafte Weiterbildungen der vorliegenden Erfindung sind Gegenstand der abhängigen Patentansprüche.

Eine erfindungsgemäße elektrische Maschine weist ein erstes Aktivteil und ein zweites Aktivteil auf, wobei das erste Aktivteil und das zweite Aktivteil jeweils eine Mehrzahl von Teilblechpaketen umfasst. Jedes der Teilblechpakete umfasst eine Mehrzahl von Einzelblechen mit einer jeweiligen axialen Breite. Die Teilblechpakete sind in axialer Richtung derart zueinander beabstandet angeordnet, dass sich jeweils zwischen zwei benachbarten Teilblechpaketen ein radialer Kühlschlitz ausbildet. Zudem sind die radialen Kühlschlitze in dem ersten Aktivteil im Vergleich zu den radialen Kühlschlitzen in dem zweiten Aktivteil in axialer Richtung versetzt angeordnet. Darüber hinaus entspricht eine Summe der axialen Breiten aller Einzelbleche in dem ersten Aktivteil einer Summe der axialen Breiten aller Einzelbleche in dem zweiten Aktivteil.

Die elektrische Maschine kann bevorzugt als Generator betrieben werden und in einer Windkraftanlage eingesetzt werden. Die elektrische Maschine umfasst das erste Aktivteil, das beispielsweise als Stator ausgebildet sein kann. Zudem umfasst die elektrische Maschine das zweite Aktivteil, das beispielsweise als Rotor ausgebildet sein kann und relativ zu dem ersten Aktivteil drehbar ausgebildet sein kann. Sowohl das erste als auch das zweite Aktivteil umfassen jeweils ein Blechpaket mit einer Mehrzahl von Einzelblechen. Die jeweiligen Einzelbleche können beispielsweise aus Eisen gebildet sein. Die Einzelbleche weisen jeweils eine axiale Breite auf. Die axiale Breite beschreibt die räumliche Erstreckung des Einzelblechs in axialer Richtung. Die Einzelbleche in dem ersten und zweiten Aktivteil sind dabei jeweils zu Teilblechpaketen gruppiert. Darüber hinaus sind die Teilblechpakete in axialer Richtung beabstandet zueinander angeordnet. Zwischen den benachbarten Teilblechpaketen bildet sich jeweils ein radialer Kühlschlitz aus. Dieser radiale Kühlschlitz beschreibt den Zwischenraum zwischen benachbarten Teilblechpaketen, der sich in radialer Richtung der elektrischen Maschine erstreckt. Diese radialen Kühlschlitze sind sowohl in dem ersten Aktivteil als auch in dem zweiten Aktivteil vorhanden. Durch die radialen Kühlschlitze kann ein Kühlmedium, beispielsweise Kühlluft, strömen, um das erste Aktivteil und das zweite Aktivteil im Betrieb der elektrischen Maschine zu kühlen. Die elektrische Maschine kann als offene oder durchzugsbelüftete elektrische Maschine ausgebildet sein. Die elektrische Maschine kann auch einen geschlossenen Innenkühlkreislauf aufweisen.

Ferner ist es vorgesehen, dass die radialen Kühlschlitze in dem ersten Aktivteil und dem zweiten Aktivteil axial zueinander verschoben sind beziehungsweise versetzt zueinander angeordnet sind. Dies bedeutet insbesondere, dass die radialen Kühlschlitze in dem ersten Aktivteil nicht fluchtend zu den radialen Kühlschlitzen in dem zweiten Aktivteil angeordnet sind. Beispielsweise kann es vorgesehen sein, dass zur Gewährleistung eines großen Versatzes zwischen den radialen Kühlschlitzen im ersten und zweiten Aktivteil die radialen Kühlschlitze in dem zweiten Aktivteil möglichst mittig zu den Teilblechpaketen in dem ersten Aktivteil angeordnet sind. Dadurch kann verhindert werden, dass sich durch die radialen Kühlschlitze in dem ersten und dem zweiten Aktivteil ein durchgängiger Kühlkanal ergibt, in dem beispielsweise Schallemissionen erzeugt werden können.

Zudem umfasst erfindungsgemäß das zweite Aktivteil einen Kühlkanal, welcher sich in axialer Richtung erstreckt und welcher in die jeweiligen radialen Kühlschlitze in dem zweiten Aktivteil mündet. Der Kühlkanal kann sich über die komplette axiale Länge des zweiten Aktivteils erstrecken. Somit kann erfindungsgemäß an den jeweiligen Randbereichen des zweiten Aktivteils ein Kühlmittelstrom eingebracht werden. Der Kühlmittelstrom, der durch den Kühlkanal strömt, verteilt sich auf die jeweiligen radialen Kühlschlitze in dem zweiten Aktivteil. Von dort gelangt der Kühlmittelstrom über den Luftspalt zwischen dem ersten Aktivteil und dem zweiten Aktivteil in die radialen Kühlschlitze des ersten Aktivteils. Nach dem Austritt aus den radialen Kühlschlitzen des ersten Aktivteils kann der Kühlmittelstrom wieder umgelenkt werden und somit zu dem Kühlkanal in dem zweiten Aktivteil geführt werden. Durch den längeren Weg des Kühlmittels beziehungsweise des Kühlmediums sowie der höheren Verwirbelung kann auch die Kühlung der elektrischen Maschine verbessert werden. Ferner können die geänderten Strömungswiderstände auch zu einer Reduzierung der Reibungsverluste führen.

Erfindungsgemäß ist es nun vorgesehen, dass die Summe der axialen Breiten aller Einzelbleche in dem ersten Aktivteil der Summe der axialen Breiten aller Einzelbleche in dem zweiten Aktivteil entspricht. Zudem ist es insbesondere vorgesehen, dass das erste Aktivteil und das zweite Aktivteil in axialer Richtung der elektrischen Maschine die gleiche Gesamtlänge aufweisen. Mit anderen Worten ist die gesamte axiale Länge abzüglich der jeweiligen axialen Längen der radialen Kühlschlitze in dem ersten und dem zweiten Aktivteil gleich. Die Summe der axialen Breiten aller Einzelbleche kann auch als Eisenlänge bezeichnet werden. Dies bedeutet also, dass die Eisenlänge in dem ersten Aktivteil und die Eisenlänge in dem zweiten Aktivteil gleich sind. Somit kann eine optimale. Ausnutzung des Eisens der Einzelbleche über die gesamte Länge der elektrischen Maschine ermöglicht werden. Zudem können üblicherweise verfügbare Berechnungsprogramme verwendet werden, da diese meist von der gleichen Eisenlänge in Stator und Rotor ausgehen. Auf diese Weise kann die elektrische Maschine einerseits besonders geräuscharm betrieben werden. Zudem wird ein effizienter Betrieb der elektrischen Maschine ermöglicht.

Des Weiteren ist es erfindungsgemäß vorgesehen, dass die radialen Kühlschlitze in dem zweiten Aktivteil in erste Kühlschlitze und zweite Kühlschlitze eingeteilt sind, wobei die ersten Kühlschlitze eine erste axiale Länge und die zweiten Kühlschlitze eine im Vergleich zur ersten axialen Länge größere, zweite axiale Länge aufweisen. Mit anderen Worten sind die radialen Kühlschlitze in dem zweiten Aktivteil mit einer unterschiedlichen Breite ausgeführt. Da die Anzahl der Kühlschlitze in dem zweiten Aktivteil größer ist als die Anzahl der radialen Kühlschlitze in dem ersten Aktivteil ist es vorgesehen, dass zumindest einige der radialen Kühlschlitze in dem zweiten Aktivteil eine geringere axiale Länge aufweisen. Somit kann erreicht werden, dass die gesamte axiale Länge des ersten und des zweiten Aktivteils gleich ist und dass die Eisenlängen in dem ersten und dem zweiten Aktivteil gleich sind. Zudem sind erfindungsgemäß die Kühlschlitze im zweiten Aktivteil derart angeordnet, dass die zweiten Kühlschlitze im Wesentlichen in einem mittleren Bereich des zweiten Aktivteils angeordnet sind, wobei der mittlere Bereich einem Heißbereich der elektrischen Maschine entspricht. Ferner sind erfindungsgemäß die radialen Kühlschlitze zum Erreichen einer gleichmäßigen Kühlung des zweiten Aktivteils in dem zweiten Aktivteil im Wesentlichen symmetrisch angeordnet.

Bevorzugt entspricht eine Anzahl der Einzelbleche in dem ersten Aktivteil im Wesentlichen einer Anzahl der Einzelbleche in dem zweiten Aktivteil. Mit anderen Worten ist eine identische Anzahl an Stator- und Rotorelektroblechen vorgesehen. Weiterhin kann es vorgesehen sein, dass die Einzelbleche in dem ersten Aktivteil und die Einzelbleche in dem zweiten Aktivteil aus demselben Material gefertigt sind. Weiterhin ist es hierbei vorteilhaft, wenn die Einzelbleche des ersten Aktivteils und die Einzelbleche des zweiten Aktivteils mit demselben Werkzeug gefertigt werden. Somit kann beispielsweise ermöglicht werden, dass die Einzelbleche des zweiten Aktivteils beziehungsweise die Rotorbleche aus den überbleibenden Anteilen der Einzelbleche des ersten Aktivteils beziehungsweise der Statorbleche gefertigt werden. Damit können die Einzelbleche und somit auch die elektrische Maschine besonders kostengünstig und mit einem geringen Aufwand gefertigt werden.

Es kann auch vorgesehen sein, dass die Anzahl der Einzelbleche in dem ersten Aktivteil größer ist als die Anzahl der Einzelbleche in dem zweiten Aktivteil. Alternativ dazu kann es vorgesehen sein, dass die Anzahl der Einzelbleche in dem ersten Aktivteil kleiner ist als die Anzahl der Einzelbleche in dem zweiten Aktivteil.

In einer weiteren Ausführungsform ist die axiale Breite aller Einzelbleche in dem ersten Aktivteil und in dem zweiten Aktivteil im Wesentlichen gleich. Mit anderen Worten weisen alle Einzelbleche in der elektrischen Maschine die gleiche axiale Breite auf. Wie bereits erläutert, können die jeweiligen Einzelbleche des ersten Aktivteils und des zweiten Aktivteils beziehungsweise des Stators und des Rotors aus dem gleichen Blech gefertigt werden. Dies ermöglicht eine kostengünstige Fertigung der Aktivteile.

Es kann auch vorgesehen sein, dass sich die axiale Breite der Einzelbleche in dem ersten Aktivteil von der axialen Breite der Einzelbleche in dem zweiten Aktivteil unterscheidet. Grundsätzlich kann es auch vorgesehen sein, dass sich die axiale Breiten der Einzelbleche innerhalb des ersten Aktivteils und/oder innerhalb des zweiten Aktivteils unterscheiden.

In einer Ausführungsform ist eine Anzahl der radialen Kühlschlitze in dem zweiten Aktivteil größer als eine Anzahl der radialen Kühlschlitze in dem ersten Aktivteil. Die Kühlschlitze in dem ersten Aktivteil und dem zweiten Aktivteil sind nicht fluchtend zueinander angeordnet. Dies wird dadurch erreicht, dass sich die Anzahl der Kühlschlitze in dem ersten Aktivteil und dem zweiten Aktivteil unterscheiden. Beispielsweise kann das zweite Aktivteil einen radialen Kühlschlitz mehr aufweisen als das erste Aktivteil. Somit kann auf einfache Weise erreicht werden, dass die radialen Kühlschlitze zueinander versetzt sind und somit die Schallemissionen der elektrischen Maschine reduziert sind. Weiterhin kann somit erreicht werden, dass die radiale Durchtrittsfläche für das Kühlmedium, insbesondere die Kühlluft, unverändert bleibt, wodurch weiterhin sichergestellt werden kann, dass abgesehen von der Höhe des Luftspalts die Austrittsfläche am zweiten Aktivteil gleich der Eintrittsfläche im ersten Aktivteil ist. Daraus resultiert ein gleichmäßiger und geringer Luftwiderstand in der gesamten elektrischen Maschine.

In einer alternativen Ausführungsform kann es vorgesehen sein, dass die Anzahl der radialen Kühlschlitze in dem ersten Aktivteil größer als eine Anzahl der radialen Kühlschlitze in dem zweiten Aktivteil. Auch auf diese Weise kann erreicht werden, dass die Kühlschlitze in dem ersten Aktivteil und dem zweiten Aktivteil sind nicht fluchtend zueinander angeordnet sind.

Erfindungsgemäß sind die zweiten Kühlschlitze in einem mittleren Bereich des zweiten Aktivteils angeordnet. Es ist erfindungsgemäß vorgesehen, dass die Heißbereiche der elektrischen Maschine, die in einem mittleren Bereich der elektrischen Maschine angeordnet sind, mit den zweiten radialen Kühlschlitzen versehen werden, die im Vergleich zu den ersten Kühlschlitzen eine größere axiale Länge aufweisen. Somit kann in dem Heißbereich der elektrischen Maschine der Kühleffekt gesteigert werden. In den Randbereichen des zweiten Aktivteils können dann die ersten Kühlschlitze angeordnet sein. Erfindungsgemäß ist es vorgesehen, dass die Anordnung der radialen Kühlschlitze in dem zweiten Aktivteil symmetrisch ist. Somit kann eine gleichmäßige Kühlung des zweiten Aktivteils ermöglicht werden.

In einer weiteren Ausgestaltung umfasst das erste Aktivteil eine Mehrzahl von Nuten, welche jeweils in eine an das zweite Aktivteil grenzende Fläche des ersten Aktivteils münden und in jede der Nuten ein zu der Fläche bündiges Verschlusselement eingebracht ist. Die jeweiligen Nuten in dem ersten Aktivteil beziehungsweise in dem Stator können sich in radialer Richtung erstrecken. Zudem können die Nuten entlang einer Umfangsrichtung des ersten Aktivteils gleichmäßig verteilt angeordnet sein. In die jeweiligen Nuten kann die Wicklung der elektrischen Maschine eingebracht werden. Zudem kann in die Nut ein entsprechender Keil zum Halten der Wicklung in der Nut eingebracht sein. Ferner ist es vorgesehen, dass in jede Nut zudem das Verschlusselement eingebracht wird, welches beispielsweise aus einem magnetischen oder einem amagnetischen Material gefertigt sein kann. Das Verschlusselement ist so ausgebildet, dass es bündig mit der Fläche des ersten Aktivteils abschließt. Diese Fläche des ersten Aktivteils ist diejenige Fläche, die dem zweiten Aktivteil beziehungsweise dem Luftspalt zugewandt ist. Somit weist das erste Aktivteil im Bereich der Nuten eine glatte Oberfläche auf. Somit können Schallemissionen zusätzlich verringert werden, da der Kühlmittelstrom nicht auf ein Blechpaket mit nach innen hin offenen Nuten trifft, sondern auf eine vollständig glatte Oberfläche.

In einer weiteren Ausführungsform kann die elektrische Maschine als Asynchronmaschine ausgebildet sein. Eine solche Asynchronmaschine kann einen Läufer aufweisen, der als Kurzschlussläufer oder als Schleifringläufer ausgebildet ist.

Eine erfindungsgemäße Windkraftanlage umfasst eine erfindungsgemäße elektrische Maschine. Damit kann eine Windkraftanlage bereitgestellt werden, bei der das Gesamtgeräusch und die Tonhaltigkeiten, die infolge des durch die elektrische Maschine strömenden Kühlmediums hervorgerufen werden, reduziert sind.

Die mit Bezug auf die erfindungsgemäße elektrische Maschine vorgestellten bevorzugten Ausführungsformen und deren Vorteile gelten entsprechend für die erfindungsgemäße Windkraftanlage.

Die Erfindung wird nun anhand von bevorzugten Ausführungsbeispielen sowie unter Bezugnahme auf die beigefügten Zeichnungen näher erläutert. Dabei zeigen:

FIG 1    eine elektrische Maschine gemäß dem Stand der Technik in einer geschnittenen Seitenansicht;

FIG 2    eine elektrische Maschine gemäß einer Ausführungsform der vorliegenden Erfindung in einer geschnittenen Seitenansicht; und

FIG 3    eine Nut der elektrischen Maschine in einer geschnittenen Seitenansicht.

In den Figuren werden gleiche und funktionsgleiche Elemente mit den gleichen Bezugszeichen versehen.

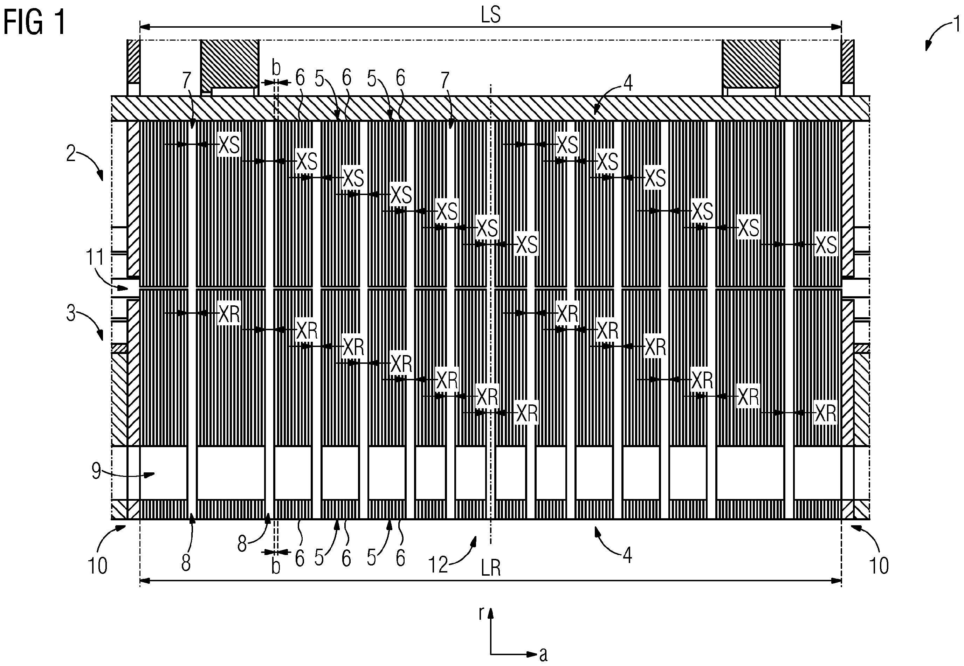

FIG 1 zeigt eine elektrische Maschine 1 gemäß dem Stand der Technik in einer geschnittenen Seitenansicht. Die elektrische Maschine 1 umfasst ein erstes Aktivteil 2 in Form eines Stators. Darüber hinaus umfasst die elektrische Maschine 1 ein zweites Aktivteil 3 in Form eines Rotors. Das zweite Aktivteil 3 ist relativ zu dem ersten Aktivteil 2 bewegbar beziehungsweise drehbar. Das erste Aktivteil 2 weist in axialer Richtung a der elektrischen Maschine 1 eine Gesamtlänge LS auf und das zweite Aktivteil 3 weist in der axialer Richtung a eine Gesamtlänge LR auf. Vorliegend sind die Gesamtlängen LS und LR der Aktivteile 2, 3 gleich.

Sowohl das erste Aktivteil 2 als auch das zweite Aktivteil 3 umfassen ein Blechpaket 4 mit einer Mehrzahl von Einzelblechen 6. Die Einzelbleche 6 sind zu jeweiligen Teilblechpaketen 5 gruppiert. Die Einzelbleche 6 weisen ein axiale Breite b auf, welche die räumliche Erstreckung der Einzelbleche 6 in der axialer Richtung a der elektrischen Maschine 1 beschreibt. Vorliegend weisen alle Einzelbleche 6 in dem ersten Aktivteil 2 und in dem zweiten Aktivteil 3 die gleiche axiale Breite b auf.

Die jeweiligen Teilblechpakete 5 sind in der axialen Richtung a der elektrischen Maschine 1 beabstandet zueinander angeordnet. In dem ersten Aktivteil 2 bilden sich somit radiale Kühlschlitze 7 und in dem zweiten Aktivteil 3 bilden sich radiale Kühlschlitze 8 aus. Die radialen Kühlschlitze 7, 8 erstrecken sich in dem jeweiligen Aktivteil 2, 3 entlang einer radialen Richtung r der elektrischen Maschine 1. Die radialen Kühlschlitze 7 in dem ersten Aktivteil 2 weisen eine axiale Länge XS auf. Die radialen Kühlschlitze 8 in dem zweiten Aktivteil 3 weisen eine axiale Länge XR auf. Vorliegend entspricht die axiale Länge XS der radialen Kühlschlitze 7 in dem ersten Aktivteil 2 der axialen Länge der XR der radialen Kühlschlitze 8 in dem zweiten Aktivteil 3. Ferner sind die radialen Kühlschlitze 8 in dem zweiten Aktivteil 3 fluchtend zu den radialen Kühlschlitzen 7 in dem ersten Aktivteil 2 angeordnet.

In dem zweiten Aktivteil 3 ist ein Kühlkanal 9 vorgesehen, der sich in axialer Richtung a durch die Teilblechpakete 5 hindurch erstreckt. Somit kann beispielsweise an den jeweiligen Randbereichen 10 des zweiten Aktivteils 3 ein Kühlmedium, beispielsweise Kühlluft, in den Kühlkanal 9 eingebracht werden. Das durch den Kühlkanal 9 strömende Kühlmedium gelangt dann zu den radialen Kühlschlitzen 8 in dem zweiten Aktivteil 3. Von dort wird es über einen Luftspalt 11 in die radialen Kühlschlitze 7 des ersten Aktivteils 2 geführt. Nach dem Austritt des Kühlmediums aus den radialen Kühlschlitzen 7 des ersten Aktivteils 2 kann der Kühlmittelstrom umgelenkt werden und wieder in den Kühlkanal 9 geführt werden. Auf diese Weise kann ein Kühlkreislauf bereitgestellt werden.

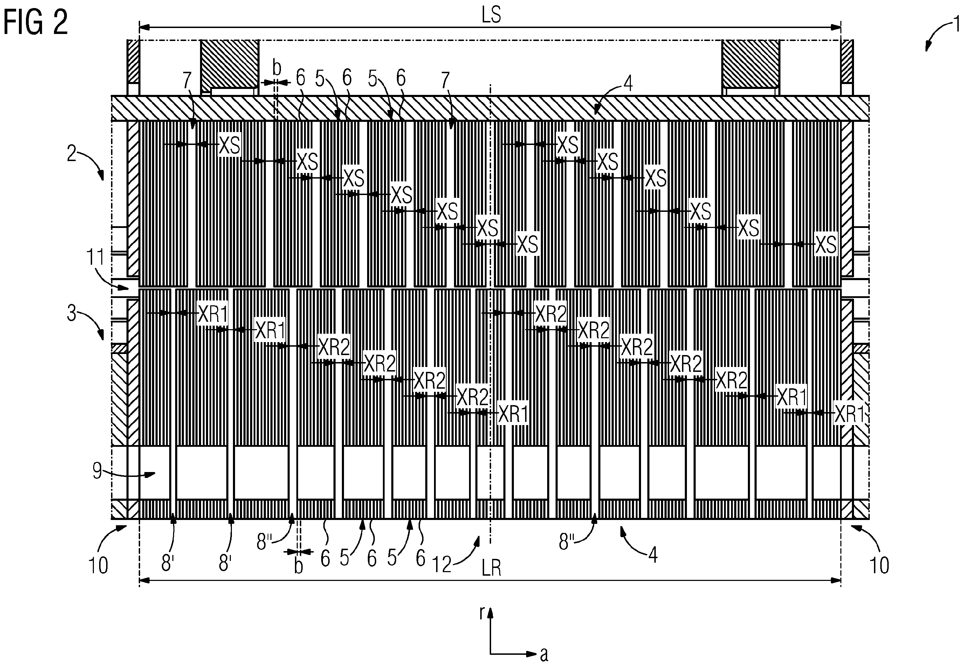

FIG 2 zeigt eine elektrische Maschine 1 gemäß einer Ausführungsform der vorliegenden Erfindung in einer geschnittenen Seitenansicht. Bei der elektrischen Maschine 1 ist das erste Aktivteil 2 analog zu dem ersten Aktivteil 2 der elektrischen Maschine 1 gemäß FIG 1 ausgebildet. Das zweite Aktivteil 3 ist im Vergleich zu dem zweiten Aktivteil 3 gemäß FIG 1 verändert. Das zweite Aktivteil 3 umfasst erste radiale Kühlschlitze 8' und zweite radiale Kühlschlitze 8". Die ersten radialen Kühlschlitze 8' weisen eine axiale Länge XR1 auf die zweiten radialen Kühlschlitze 8" weisen eine axiale Länge XR2 auf. Dabei ist die axiale Länge XR2 der zweiten radialen Kühlschlitze 8" größer als die axiale Länge XR1 der ersten radialen Kühlschlitze 8'. Die axiale Länge XR2 kann beispielsweise 10 mm betragen und die axiale Länge XR1 kann beispielsweise 8 mm betragen. Die axiale Länge XR2 der zweiten Kühlschlitze 8" kann der axialen Länge XS der radialen Kühlschlitze 7 in dem ersten Aktivteil 2 entsprechen.

Die Anzahl der radialen Kühlschlitze 8', 8" in dem zweiten Aktivteil 3 ist größer als die Anzahl der radialen Kühlschlitze 7 in dem ersten Aktivteil 2. Vorliegend ist in dem zweiten Aktivteil 3 ein radialer Kühlschlitz 8', 8" mehr vorgesehen als in dem ersten Aktivteil 2. Dies wird dadurch erreicht, dass die radialen Kühlschlitze 8', 8" in dem zweiten Aktivteil 3 die unterschiedlichen axialen Längen XR1 und XR2 aufweisen. Dabei wurde die Anzahl der ersten Kühlschlitze 8' und zweiten Kühlschlitze 8" so gewählt, dass die Gesamtlänge LR des zweiten Aktivteils 3 der Gesamtlänge LS des ersten Aktivteils 2 entspricht. Für den Fall, dass die axiale Länge XR2 der zweiten Kühlschlitze 8" der axialen Länge XS der Kühlschlitze 7 in dem ersten Aktivteil entspricht, müssten die ersten Kühlschlitze 8' in Summe einmal um die axiale Länge XR2 geschmälert werden.

Die Kühlschlitze 8', 8" in dem zweiten Aktivteil 3 sind dabei derart angeordnet, dass die zweiten Kühlschlitze 8" im Wesentlichen in einem mittleren Bereich 12 des zweiten Aktivteils 3 angeordnet sind. Dieser mittlere Bereich 12 entspricht einem Heißbereich der elektrischen Maschine 1. Dadurch, dass in diesem Heißbereich die zweiten radialen Kühlschlitze 8" mit der größeren axialen Länge XR2 angeordnet sind, kann dieser Heißbereich effektiver gekühlt werden. Zudem sind die radialen Kühlschlitze 8', 8" in dem zweiten Aktivteil 3 im Wesentlichen symmetrisch angeordnet, wodurch eine gleichmäßige Kühlung des zweiten Aktivteils 3 erreicht wird. Da die Summe der axialen Längen XR1 und XR2 kumuliert gleich der Summe der axialen Längen XR von der elektrischen Maschine 1 gemäß FIG 1 ist, kann die Entwärmung des ersten und des zweiten Aktivteils 2, 3 mit bestehenden Berechnungsmethoden und mit Messwerten von konventionellen elektrischen Maschinen, beispielsweise der elektrischen Maschine 1 gemäß FIG 1 mit genau gegenüberliegenden Kühlschlitzen 7, 8, einfach bestimmt werden.

Auch bei der elektrischen Maschine 1 gemäß FIG 2 weisen die jeweiligen Einzelbleche 6 in dem ersten Aktivteil 2 und dem zweiten Aktivteil 3 die gleiche axiale Breite b auf. Zudem ist es vorgesehen, dass die Anzahl der Einzelbleche 6 in dem ersten Aktivteil 2 und dem zweiten Aktivteil 3 gleich ist. Somit wird erreicht, dass die Summe der axialen Breiten b aller Einzelbleche 6 in dem ersten Aktivteil 2 und die Summe der axialen Breiten b aller Einzelbleche 6 in dem zweiten Aktivteil 3 gleich ist. Die Summe der axialen Breiten in den jeweiligen Aktivteilen 2, 3 kann auch als Eisenlänge bezeichnet werden. Somit ist die Eisenlänge in dem ersten Aktivteil 2 und in dem zweiten Aktivteil 3 gleich. Anders ausgedrückt entspricht die Differenz der Gesamtlänge LS des ersten Aktivteils und aller axialen Längen XS der radialen Kühlschlitze 7 in dem ersten Aktivteil 2 der Differenz der Gesamtlänge LR und der axialen Längen XR1, XR2 aller radialen Kühlschlitze 8', 8" in dem zweiten Aktivteil 3. Dies kann durch folgende Formel ausgedrückt werden:

$$(LS - \sum(XS)) = (LR - (\sum XR1) + (\sum XR2)).$$

Durch die gleiche Eisenlänge kann sowohl im ersten Aktivteil 2 als auch im zweiten Aktivteil 3 die komplette Eisenlänge elektromagnetisch optimal genutzt werden. Zudem kann durch die identische Anzahl der Einzelbleche 6 in dem ersten Aktivteil 2 und dem zweiten Aktivteil 3 eine einfache und kostengünstige Fertigung der Einzelbleche 6 ermöglicht werden. Beispielsweise können die Einzelbleche 6 in dem zweiten Aktivteil aus einem überbleibenden Anteil eines Blechs, aus dem die Einzelbleche 6 des ersten Aktivteils 2 gefertigt wurden, gebildet werden.

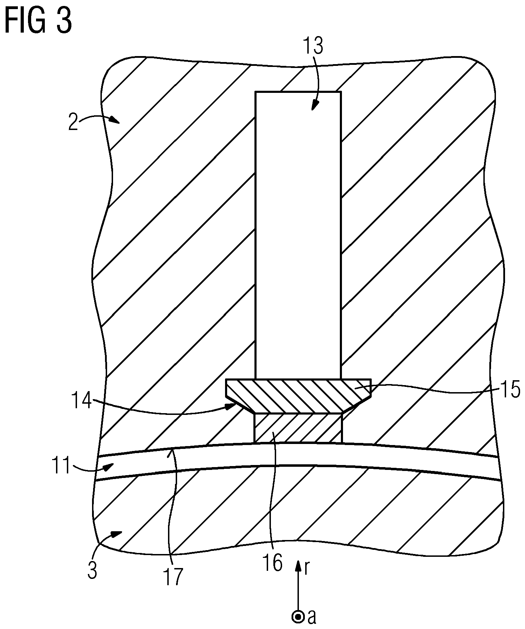

FIG 3 zeigt eine ausschnittsweise Darstellung des ersten Aktivteils 2 in einer geschnittenen Seitenansicht. Hierbei ist eine Nut 13 des ersten Aktivteils 2 zu erkennen. In die Nut 13 kann eine Wicklung der elektrischen Maschine 1 eingebracht werden. Die Nut 13 weist ferner eine Ausnehmung 14 auf, in welche ein Keil 15 eingebracht ist. Der Keil 15 dient zum Halten der hier nicht dargestellten Wicklung in der Nut 13. Darüber hinaus ist in die Nut 13 ein Verschlusselement 16 eingebracht, welches an den Keil 15 grenzt. Das Verschlusselement 16 kann insbesondere im Bereich der sogenannten Streunut angeordnet sein. Das Verschlusselement 16 kann aus einem magnetischen oder einem amagnetischen Material gefertigt werden. Das Verschlusselement 16 ist so ausgebildet, dass es zu einer Fläche 17 des ersten Aktivteils 2, welches an den Luftspalt 11 grenzt, bündig ist. Somit kann eine glatte Oberfläche des ersten Aktivteils 2 ermöglicht werden. Auf diese Weise können Schaltemissionen zusätzlich reduziert werden.

In den FIG 1 und 2 ist das erste Aktivteil 2 beziehungsweise der Stator unverändert. Die vorausgehend beschriebenen Maßnahmen an dem zweiten Aktivteil 3 beziehungsweise dem Rotor können ebenso auf die Kühlschlitzanordnung in dem ersten Aktivteil 2 angewandt werden. Es können prinzipiell auch mehr als zwei axiale Längen XR1 und XR2 für die radialen Kühlschlitze 8', 8" in dem zweiten Aktivteil verwendet werden.

**Patentansprüche**

1.  Elektrische Maschine (1) mit

    - einem ersten Aktivteil (2) und
    - einem zweiten Aktivteil (3), wobei
    - das erste Aktivteil (2) und das zweite Aktivteil (3) jeweils eine Mehrzahl von Teilblechpaketen (5) umfasst,
    - jedes der Teilblechpakete (5) eine Mehrzahl von Einzelblechen (6) mit einer jeweiligen axialen Breite (b) umfasst,
    - die Teilblechpakete (5) in axialer Richtung (a) derart zueinander beabstandet angeordnet sind, dass sich jeweils zwischen zwei benachbarten Teilblechpaketen (5) ein radialer Kühlschlitz (7, 8', 8") ausbildet,
    - die radialen Kühlschlitze (7) in dem ersten Aktivteil (2) im Vergleich zu den radialen Kühlschlitzen (8', 8") in dem zweiten Aktivteil (3) in axialer Richtung (a) versetzt angeordnet sind, und
    - das zweite Aktivteil (3) einen Kühlkanal (9) umfasst, welcher sich in axialer Richtung (a) erstreckt und welcher in die jeweiligen radialen Kühlschlitze (8', 8'') in dem zweiten Aktivteil (3) mündet, wobei an jeweiligen Randbereichen (10) des zweiten Aktivteils (3) ein Kühlmittelstrom in den Kühlkanal (9) einbringbar ist, wobei sich der Kühlmittelstrom, der durch den Kühlkanal (9) strömt, auf die jeweiligen radialen Kühlschlitze (8', 8'') in dem zweiten Aktivteil (3) verteilt und von dort über einen Luftspalt (11) zwischen dem ersten Aktivteil (2) und dem zweiten Aktivteil (3) in die radialen Kühlschlitze (7) des ersten Aktivteils (2) gelangt,

**dadurch gekennzeichnet, dass**

- eine Summe der axialen Breiten (b) aller Einzelbleche (6) in dem ersten Aktivteil (2) einer Summe der axialen Breiten (b) aller Einzelbleche (6) in dem zweiten Aktivteil (3) entspricht,
- die radialen Kühlschlitze (8', 8'') in dem zweiten Aktivteil (3) in erste Kühlschlitze (8') und zweite Kühlschlitze (8'') eingeteilt sind, wobei die ersten Kühlschlitze (8') eine erste axiale Länge (XR1) und die zweiten Kühlschlitze (8'') eine im Vergleich zur ersten axialen Länge (XR1) größere, zweite axiale Länge (XR2) aufweisen,
- die Kühlschlitze (8',8'') im zweiten Aktivteil derart angeordnet sind, dass die zweiten Kühlschlitze (8', 8'') im Wesentlichen in einem mittleren Bereich (12) des zweiten Aktivteils (3) angeordnet sind, wobei der mittlere Bereich (12) einem Heißbereich der elektrischen Maschine (1) entspricht, und
- die radialen Kühlschlitze (8',8'') zum Erreichen einer gleichmäßigen Kühlung des zweiten Aktivteils (3) in dem zweiten Aktivteil (3) im Wesentlichen symmetrisch angeordnet sind.

2. Elektrische Maschine (1) nach Anspruch 1, **dadurch gekennzeichnet , dass** eine Anzahl der Einzelbleche (6) in dem ersten Aktivteil (2) im Wesentlichen einer Anzahl der Einzelbleche (6) in dem zweiten Aktivteil (3) entspricht.

3. Elektrische Maschine (1) nach Anspruch 1 oder 2, **dadurch gekennzeichnet, dass** die axiale Breite (b) aller Einzelbleche (6) in dem ersten Aktivteil (2) und in dem zweiten Aktivteil (3) im Wesentlichen gleich ist.

4. Elektrische Maschine (1) nach einem der vorhergehenden Ansprüche, **dadurch gekennzeichnet, dass** eine Anzahl der radialen Kühlschlitze (8',8'') in dem zweiten Aktivteil (3) größer ist als eine Anzahl der radialen Kühlschlitze (7) in dem ersten Aktivteil (2).

5. Elektrische Maschine (1) nach einem der vorhergehenden Ansprüche, **dadurch gekennzeichnet,**

**dass** das erste Aktivteil (2) eine Mehrzahl von Nuten (13) umfasst, welche jeweils in eine an das zweite Aktivteil (3) grenzende Fläche (17) des ersten Aktivteils (2) münden, und in jede der Nuten (13) ein zu der Fläche (17) bündiges Verschlusselement (16) eingebracht ist.

6. Elektrische Maschine (1) nach Anspruch 5, **dadurch gekennzeichnet, dass** das Verschlusselement (16) aus einem magnetischen Material oder einem amagnetischen Material gebildet ist.

7. Elektrische Maschine (1) nach einem der vorhergehenden Ansprüche, **dadurch gekennzeichnet, dass** die elektrische Maschine (1) als Asynchronmaschine ausgebildet ist und einen Kurzschlussläufer oder einen Schleifringläufer aufweist.

8. Windkraftanlage mit einer elektrischen Maschine (1) nach einem der vorhergehenden Ansprüche.

**Claims**

1. Electrical machine (1) comprising

- a first active part (2) and
- a second active part (3), wherein
- both the first active part (2) and the second active part (3) have a plurality of laminated sub-cores (5),
- each of the laminated sub-cores (5) has a plurality of individual laminations (6), each comprising an axial width (b),
- the laminated sub-cores (5) are mutually spaced in an axial direction (a) such that a respective radial cooling slot (7, 8', 8'') is formed between two adjacent laminated sub-cores (5),
- the radial cooling slots (7) in the first active part (2) are offset in the axial direction (a) in relation to one another in comparison to the radial cooling slots (8', 8'') in the second active part (3), and
- the second active part (3) comprises a cooling channel (9) which extends in an axial direction (a) and which leads into the respective radial cooling slots (8', 8'') in the second active part (3), wherein a coolant flow can be introduced into the cooling channel (9) at respective border areas (10) of the second active part (3), wherein the coolant flow which flows through the cooling channel (9) is distributed over the respective radial cooling slots (8', 8'') in the second active part (3) and from there arrives in the radial cooling slots (7) of the first active part (2) by way of an air gap (11) between the first active part (2) and the second active part (3),

**characterised in that**

- the sum of the axial widths (b) of all individual laminations (6) in the first active part (2) corresponds to the sum of the axial widths (b) of all individual laminations (6) in the second active part (3),
- the radial cooling slots (8', 8") in the second active part (3) are divided into first cooling slots (8') and second cooling slots (8''), wherein the first cooling slots (8') have a first axial length (XR1) and the second cooling slots (8") have a greater second axial length (XR2) in comparison to the first axial length (XR1),
- the cooling slots (8', 8") in the second active part are arranged such that the second cooling slots (8', 8") are essentially arranged in a middle region (12) of the second active part (3), wherein the middle region (12) corresponds to a hot area of the electrical machine (1), and
- the radial cooling slots (8', 8") in the second active part (3) are essentially arranged symmetrically in order to achieve uniform cooling of the second active part (3).

2. Electrical machine (1) according to claim 1, **characterised in that** a number of individual laminations (6) in the first active part (2) essentially corresponds to a number of individual laminations (6) in the second active part (3).

3. Electrical machine (1) according to claim 1 or 2, **characterised in that** the axial width (b) of all the individual laminations (6) in the first active part (2) and in the second active part (3) is essentially the same.

4. Electrical machine (1) according to one of the preceding claims, **characterised in that** a number of radial cooling slots (8', 8") in the second active part (3) is greater than a number of radial cooling slots (7) in the first active part (2).

5. Electrical machine (1) according to one of the preceding claims, **characterised in that** the first active part (2) comprises a plurality of grooves (13) which each open into a surface (17) of the first active part (2) adjacent to the second active part (3), and a locking element (16) flush with the surface (17) is introduced into each of the grooves (13).

6. Electrical machine (1) according to claim 5, **characterised in that** the locking element (16) is formed from a magnetic material or an amagnetic material.

7. Electrical machine (1) according to one of the preceding claims, **characterised in that** the electrical machine (1) is designed as an asynchronous machine and has a squirrel-cage rotor or a slip ring rotor.

8. Wind turbine with an electrical machine (1) according to one of the preceding claims.

## Revendications

1. Machine (1) électrique comprenant

   - une première partie (2) active et
   - une deuxième partie (3) active, dans laquelle
   - la première partie (2) active et la deuxième partie (3) active comprennent chacune une pluralité de sous-paquets (5) de tôles,
   - chacun des sous-paquets (5) de tôle comprend une pluralité de tôles (6) individuelles ayant une largeur (b) axiale respective,
   - les sous-paquets (5) de tôles sont disposés dans la direction (a) axiale, à distance les uns des autres, de manière à former, respectivement, entre deux sous-paquets (5) de tôles voisins, une fente (7, 8', 8") de refroidissement radiale,
   - les fentes (7) de refroidissement radiales de la première partie (2) active sont décalées dans la direction (a) axiale, par rapport aux fentes (8', 8") de refroidissement radiales de la deuxième partie (3) active et
   - la deuxième partie (3) active comprend un conduit (9) de refroidissement, qui s'étend dans la direction (a) axiale et qui débouche dans les fentes (8', 8") de refroidissement radiales respectives de la deuxième partie (3) active, un courant de fluide de refroidissement pouvant, à chaque région (10) de bord de la deuxième partie (3) active, être introduit dans le conduit (9) de refroidissement, le courant de fluide de refroidissement, qui passe dans le conduit (9) de refroidissement, étant réparti sur les fentes (8', 8") de refroidissement radiales de la deuxième partie (3) active et de là, parvenant, par un entrefer (11) entre la première partie (2) active et la deuxième partie (3) active, aux fentes (7) de refroidissement radiales de la première partie (2) active,

   **caractérisée en ce que**

   - une somme des largeurs (b) axiales de toutes les tôles (6) individuelles de la première partie (2) active correspond à une somme des largeurs (b) axiales de toutes les tôles (6) individuelles de la deuxième partie (3) active,
   - les fentes (8', 8") de refroidissement radiales de la deuxième partie (3) active sont classées en des premières fentes (8') de refroidissement et en des deuxième fentes (8") de refroidissement, les premières fentes (8') de refroidissement ayant une première longueur (XR1) axiale et les deuxième fentes (8") de refroidissement ayant une deuxième longueur (XR2) axiale plus grande que les premières longueurs (XR1) axiales,
- les fentes (8', 8") de refroidissement de la deuxième partie active sont disposées, de manière à ce que les deuxième fentes (8', 8") de refroidissement soient disposées sensiblement dans une région (12) médiane de la deuxième partie (3) active, la région (12) médiane correspondant à une région chaude de la machine (1) électrique et
- les fentes (8', 8") de refroidissement radiales sont, pour obtenir un refroidissement uniforme de la deuxième partie (3) active, disposées sensiblement symétriquement dans la deuxième partie (3) active.

2. Machine (1) électrique suivant la revendication 1, **caractérisée en ce que**
le nombre des tôles (6) individuelles de la première partie (2) active correspond sensiblement au nombre des tôles (6) individuelles de la deuxième partie (3) active.

3. Machine (1) électrique suivant la revendication 1 ou 2,
**caractérisée en ce que**
la largeur (b) axiale, de toutes les tôles (6) individuelles, est sensiblement la même dans la première partie (2) active et dans la deuxième partie (3) active.

4. Machine (1) électrique suivant l'une des revendications précédentes, **caractérisée en ce que** le nombre des fentes (8', 8") de refroidissement radiales de la deuxième partie (3) active est plus grand que le nombre des fentes ((7) de refroidissement radiales de la première partie (2) active.

5. Machine (1) électrique suivant l'une des revendications précédentes,
**caractérisée en ce que**
la première partie (2) active comprend une pluralité d'encoches (13), qui débouchent chacune dans une surface (17), voisine de la deuxième partie (3) active, de la première partie (2) active et un élément (16) de fermeture, à affleurement avec la surface (17), est introduit dans chacune des encoches (13).

6. Machine (1) électrique suivant la revendication 5, **caractérisée en ce que** l'élément (16) de fermeture est en un matériau magnétique ou en un matériau amagnétique.

7. Machine (1) électrique suivant l'une des revendications précédentes, **caractérisée en ce que** la machine (1) électrique est constituée sous la forme d'une machine asynchrone et a un rotor en court-circuit ou un rotor bobiné.

8. Eolienne ayant une machine (1) électrique suivant l'une des revendications précédentes.

FIG 1

FIG 2

EP 3 353 878 B1

FIG 3

**IN DER BESCHREIBUNG AUFGEFÜHRTE DOKUMENTE**

**In der Beschreibung aufgeführte Patentdokumente**

- DE 102014115666 A1
- CN 203278421 U